**Europäisches Patentamt**

**European Patent Office**

**Office européen des brevets**

(19)

(11) Veröffentlichungsnummer : **0 386 821 B1**

(12)

# EUROPÄISCHE PATENTSCHRIFT

(45) Veröffentlichungstag der Patentschrift :
**26.10.94 Patentblatt 94/43**

(51) Int. Cl.⁵ : **H01G 4/30,** H01G 1/01,
H01G 1/015

(21) Anmeldenummer : **90200447.2**

(22) Anmeldetag : **26.02.90**

(54) Kondensator und Verfahren zu seiner Herstellung.

(30) Priorität : **03.03.89 DE 3906731**

(43) Veröffentlichungstag der Anmeldung :
**12.09.90 Patentblatt 90/37**

(45) Bekanntmachung des Hinweises auf die
Patenterteilung :
**26.10.94 Patentblatt 94/43**

(84) Benannte Vertragsstaaten :
**DE FR GB**

(56) Entgegenhaltungen :
EP-A- 0 061 081
FR-A- 1 161 479
GB-A- 1 324 010

(73) Patentinhaber : **Philips Patentverwaltung
GmbH
Wendenstrasse 35c
D-20097 Hamburg (DE)**

(84) **DE**
Patentinhaber : **N.V. Philips'
Gloeilampenfabrieken
Groenewoudseweg 1
NL-5621 BA Eindhoven (NL)**

(84) **FR GB**

(72) Erfinder : **Greuel, Georg, Dipl.-Ing.
Hauptstrasse 36
D-5106 Roetgen (DE)**

(74) Vertreter : **Kupfermann, Fritz-Joachim,
Dipl.-Ing. et al
Philips Patentverwaltung GmbH
Postfach 10 51 49
D-20035 Hamburg (DE)**

**Beschreibung**

Die Erfindung betrifft einen Schichtkondensator mit einer dielektrischen Schicht zwischen mindestens einer Elektrode und Gegenelektrode, welche derart parallel zueinander versetzt angeordnet sind, daß eine Kante der Elektrode nur an der einen und die gegenüberliegende Kante der Gegenelektrode nur an der anderen Stirnseite des Kondensators bündig enden und dort mit Anschlußkontakten versehen sind und mindestens die Elektrode im Bereich der Stirnseite ein Fenster aufweist und sich das nichtkontaktierte Ende der Gegenelektrode in den Bereich des Fensters erstreckt, sowie ein Verfahren zu dessen Herstellung.

Aus der französischen Patentschrift FR-A-1.161.479 ist ein elektrischer Kondensator bekannt, der einen gewickelten oder geschichteten Folienkondensator betrifft, bei dem eine dielektrische Schicht aus Papier zwischen zwei Elektrodenfolien aufgewickelt oder geschichtet ist. Die beiden bandförmigen Elektrodenfolien haben jeweils eine metallisierte Kontaktkante und eine nichtmetallisierte gegenüberliegende Kante und sind derart aufeinander geschichtet, daß jeweils eine metallisierte und nichtmetallisierte Kante aufeinander liegen. Im Bereich der Kontaktkante weist eine der bandförmigen Folien schmale sich entlang der Kante erstreckende und durch Kontaktbereiche unterbrochene nichtmetallisierte Fenster auf, um eine laterale Verschiebung der beiden Elektrodenfolien zueinander auszugleichen, also kapazitiv nicht wirksam werden zu lassen. Dieser Aufbau hat jedoch insbesondere bei Schichtkondensatoren den Nachteil, daß das verbleibende Anschlußmaterial im Bereich der Fenster elektrisch nicht ausreichen könnte oder mechanisch zu empfindlich ist.

Kondensatoren, wie zum Beispiel keramische Vielschichtkondensatoren, werden in großen Stückzahlen produziert, da sie aufgrund ihrer Eigenschaften für automatische Leiterplattenbestückung (SMD-Technik mit surface mounted devices) besonders geeignet sind. Vielschichtkondensatoren haben eine hohe Volumenkapazität, d.h. eine geringe Baugröße, sie haben den Vorteil eines großen Bereiches der Kapazität von pF bis μF und sie sind in standardisierten Baugrößen herstellbar.

Um die mit SMD-Techniken erreichbare Kostenreduzierung und Qualitätsverbesserung zu sichern, werden an alle verwendeten Bauelemente hohe Anforderungen in bezug auf Ausfallrate und Einheiten der zulässigen Kapazitätstoleranzen gestellt.

Keramische Vielschichtkondensatoren werden in bekannter Weise dadurch hergestellt, daß aus einer Suspension eines dielektrischen keramischen Pulvers mit einem Bindemittel eine Folie gewalzt oder gezogen wird. Diese Folie wird in einzelne Platten zerschnitten, auf die Elektroden in einem Siebdruckverfahren mit einer Metallpaste aufgebracht werden.

Die bedruckten grünen keramischen Folien werden gestapelt und unter hohem Druck verdichtet. Aus diesem Sandwichpaket werden einzelne Kondensatorkörper in Form eines Sandwichstapels herausgestanzt oder geschnitten, bevor das Bindemittel ausgeheizt und die Sandwichstapel gesintert werden. Nach dem Sinterungsprozeß erfolgt die Kontaktierung der Elektrodenlagen durch Metallisierung der einander gegenüberliegenden Stirnflächen des Kondensatorkörpers.

Mit diesem Herstellungsverfahren ist verbunden, daß inhomogene Ausgangsmaterialien oder veränderliche Prozeßparameter wie Zeit, Temperatur, Zusammensetzung der Sinteratmosphäre oder Toleranzen innerhalb der Fertigungsautomaten, z.B. beim Ausrichten von Werkzeug und Werkstück, zu einer Abweichung der Kapazität vom Sollwert führen. Durch Optimierung des Herstellungsprozesses lassen sich diese Fehlerquellen nur zum Teil beheben, nicht zuletzt deshalb, weil der auf dem Markt durchsetzbare Preis je Bauelement begrenzt ist und eine Großserienfertigung nicht beliebig kostspielig sein darf.

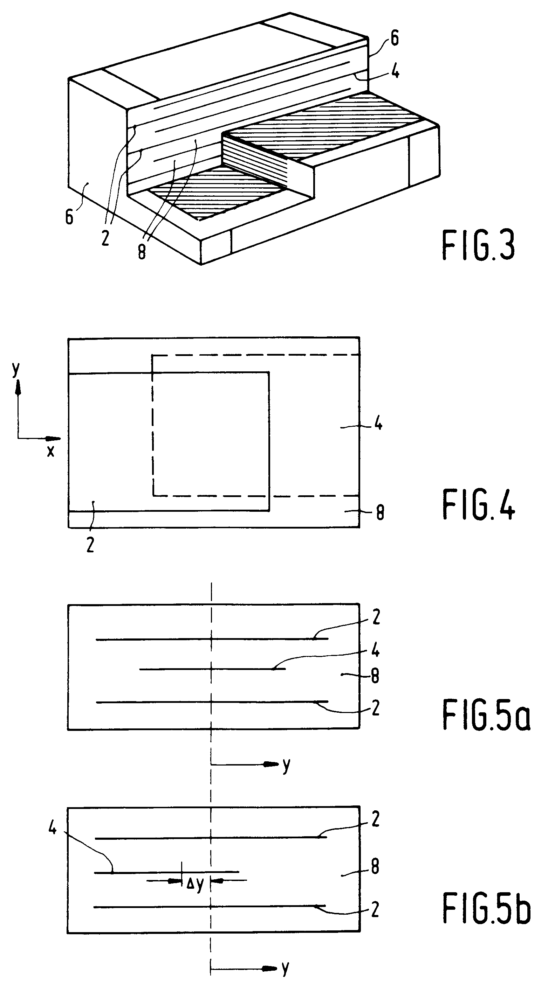

Bekannte Vielschichtkondensatoren sind, wie in Figur 3 dargestellt, aufgebaut. Mit 2 sind die Elektroden, mit 4 sind die Gegenelektroden, mit 6 sind die äußeren Anschlußkontakte an den Stirnflächen des Kondensators und mit 8 sind die dielektrischen Schichten bezeichnet. Verschieben sich die einzelnen Elektroden gegeneinander in x- und in y-Richtung, wie in Figur 4 gezeigt ist, ändert sich auch die mit den im Sandwichstapel folgenden Gegenelektroden 4 gemeinsam überdeckte Fläche, so daß nach den bekannten Gesetzen der Physik eine Kapazitätsänderung auftritt. Dieses Problem ist nicht beschränkt auf Vielschichtkondensatoren sondern erstreckt sich allgemein auf Kondensatoren mit flächigen, von einander gegenüberliegenden Stirnflächen her mit elektrischen Anschlüssen (äußere Anschlußkontakte) versehene Kondensatoren, also z.B. Plattenkondensatoren.

Nach dem bisherigen Stand der Technik ist der Fachmann in der Lage, Verschiebungen der Elektroden 2 in y-Richtung gemäß Figur 4 weitgehend zu kompensieren, indem jede Gegenelektrode 4 innerhalb des Sandwichstapels verbreitert wird. In Figur 5 ist ein Schnitt in y-Richtung durch einen Sandwichstapel mit zwei Elektroden 2, die verbreitert wurden, dargestellt (Fig. 5a). Die Kapazität eines derart aufgebauten Vielschichtkondensators ändert sich nur geringfügig, solange die Gegenelektrode 4 trotz Verschiebung um die Länge Δy vollständig innerhalb des gemeinsamen Überdeckungsbereiches ihrer benachbarten Elektroden 2 verbleibt (Fig. 5b). Besonders wünschenswert ist es nun aber, auch einen Seitenversatz einzelner Elektroden 2 in x-Richtung gemäß Figur 4 zu kompensieren, da dieser Seitenversatz in x-Richtung die Werte für die Kapazität ganz wesentlich beeinflußt.

Der Erfindung liegt die Aufgabe zugrunde, die Qualität von Schichtkondensatoren dahingehend zu verbessern, daß bei der Vermeidung von herstellungsbedingten geringfügigen Elektrodenverschiebungen auftretende Kontaktprobleme vermieden werden.

Diese Aufgabe hinsichtlich des Schichtkondensators wird erfindungsgemäß dadurch gelöst, daß sich das Fenster parallel zur stirnseitigen kürzeren Kante der Elektrode erstreckt und im Bereich des Fensters auf der Elektrode eine Verbreiterung der mit Elektrodenmaterial versehenen Fläche vorgesehen ist, sowie hinsichtlich des Verfahrens zu dessen Herstellung durch die kennzeichnenden Merkmale des Anspruchs 8.

Nach einer vorteilhaften Weiterbildung des erfindungsgemäßen Kondensators weist mindestens eine Gegenelektrode in ihrem der ihr zugeordneten äußeren Anschlußkontakt benachbarten Endbereich ein Fenster auf.

Nach vorteilhaften Weiterbildungen der Erfindung weisen die Elektrode(n) und/oder die Gegenelektrode(n) im Bereich (ihres) ihrer Fenster(s) eine verbreiterte Fläche auf oder das (die) Fenster ist (sind) geteilt, derart, daß mindestens ein sich in Längsrichtung der Elektrode(n)und/oder der Gegenelektrode(n) erstreckender Mittelsteg aus Elektrodenmaterial ausgebildet ist.

Vorzugsweise bestehen die dielektrischen Schichten aus Keramik, wobei die Elektroden/Gegenelektroden vorzugsweise Metallschichten sind, z.B. aus Nickel oder Chrom/Nickel.

Ein Verfahren zur Herstellung von erfindungsgemäß ausgebildeten Kondensatoren, wobei mindenstens eine dielektrische Schicht mit einer jeweils flächigen Elektrode und Gegenelektrode versehen wird und die Elektrode(n) und die Gegenelektrode(n) versetzt gegeneinander angeordnet werden, derart, daß sie in der Ebene jeweils einer von zwei einander gegenüberliegenden Stirnflächen des Kondensators bündig enden, wonach an den Stirnflächen die Elektrode(n)/Gegenelektrode(n) kontaktierende äußere Anschlußkontakte angebracht werden, ist dadurch gekennzeichnet, daß in mindestens einer Elektrode in ihrem, dem ihr zugeordneten äußeren Anschlußkontakt benachbarten Endbereich ein Fenster angebracht wird und daß die Elektrode(n) so angeordnet wird (werden), daß das(die) nichtkontaktierte(n) Ende(n) der Gegenelektrode(n) sich in den Bereich (des) der Fenster(s) erstreckt(erstrecken).

Nach einer vorteilhaften Weiterbildung des Verfahrens gemäß der Erfindung wird der Kondensator aus mindestens einer Folie aus ungebrannter grüner Keramik als dielektrischer Schicht mit darauf angebrachten metallischen Schichten für die Elektrode(n) und die Gegenelektrode(n) aufgebaut, anschließend gesintert und mit den äußeren Anschlußkontakten versehen.

Nach einer weiteren vorteilhaften Ausgestaltung des Verfahrens gemäß der Erfindung werden die Schichten für die Elektrode(n) und Gegenelektrode(n) in Form einer Suspension von Metallpulver in einem organischen Bindemittel auf die dielektrischen Schicht(en) aufgebracht unter Anwendung mindestens einer Maske, die jeweils die nicht mit der Suspension zu bedeckenden Bereiche der dielektrischen Schicht(en) und insbesondere die den auszubildenden Fenstern entsprechenden Bereiche abdeckt.

Mit der Erfindung ergibt sich insbesondere der Vorteil, daß die Kapazität von Kondensatoren der oben beschriebenen Art weitgehend unbeeinflußt bleibt, auch wenn einzelne Elektroden oder Gegenelektroden sich in bezug auf die ihnen benachbarten Gegenelektroden in Richtung auf die äußeren Anschlußkontakte, also in x-Richtung, ungewollt gegeneinander verschieben.

Im folgenden werden Ausführungsbeispiele der Erfindung am Beispiel eines Vielschichtkondensators beschrieben und in ihrer Wirkungsweise erläutert.

Es zeigen:

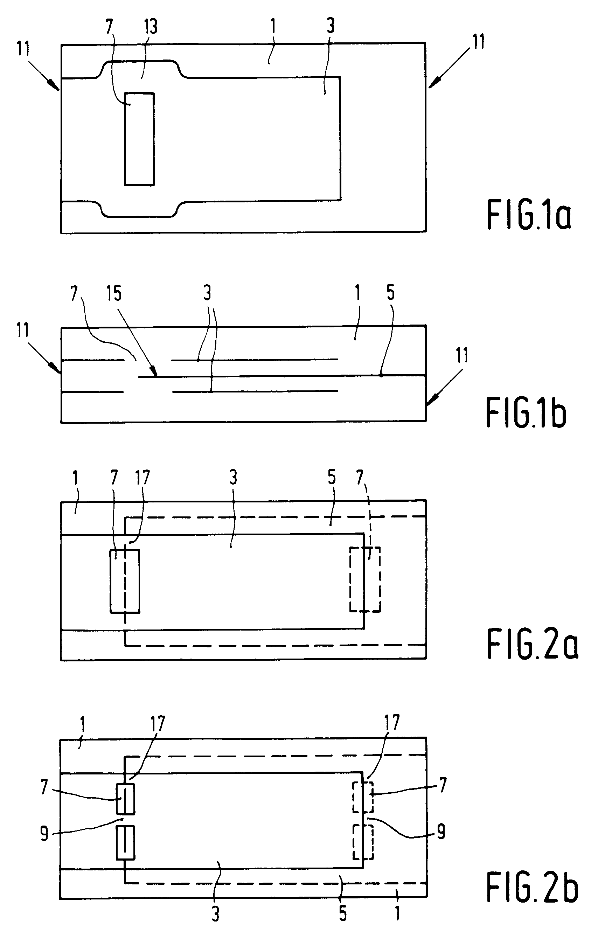

Fig. 1 a), 1 b)    Prinzipdarstellung einer erfindungsgemäß ausgebildeten Elektrode in Draufsicht (Figur 1a),

und im Schnitt (Figur 1b),

Fig. 2a), 2b)    Draufsichten auf Vielschichtkondensatoren mit unterschiedlichen Ausführungsformen von erfindungsgemäß ausgebildeten Elektroden/Gegenelektroden.

Mit der vorliegenden Erfindung werden Formen von Elektroden und Gegenelektroden für beispielsweise Vielschichtkondensatoren vorgeschlagen, die die Kapazität weitgehend unabhängig machen von einer Verschiebung der Elektroden und/oder der Gegenelektroden in Richtung auf die beiden, die Elektroden und Gegenelektroden kontaktierenden äußeren Anschlußkontakte.In den Figuren 1a bis 2b ist die prinzipielle Lösung dieses Problems veranschaulicht.

Gemäß der in Figur 1 im Prinzip dargestellten Ausführungsform einer Elektrode 3 auf einer dielektrischen Schicht 1 ist in die Elektrode 3 in ihrem, dem äußeren Anschlußkontakt 11 benachbarten Endbereich ein Fenster 7 freigelassen. Die Elektrode 3 hat in ihrem dem Fenster 7 benachbarten Bereich eine verbreiterte Fläche 13. In Figur 1b ist diese Ausführungsform im Schnitt dargestellt. Bei der hier dargestellten Ausführungsform ist in jeder Elektrode 3 im Sandwichstapel ein Fenster 7 vorgesehen (vergleiche Figur 1b), so daß das nichtkontaktierte Ende 15 der im Sandwichstapel nächstfolgenden Gegenelektrode 5 im Bereich des Fensters 7

3

liegt. Solange diese Bedingung erfüllt ist, ändert sich die Kapazität eines solchen Vielschichtkondensators allenfalls geringfügig im Vergleich zu Vielschichtkondensatoren mit Elektroden, die kein(e) Fenster aufweisen, wenn eine Verschiebung der Elektroden 3 und/oder Gegenelektroden 5 in Richtung auf die äußeren Anschlußkontakte 11, also in x-Richtung, auftritt. Die auf diese Weise deutlich verbesserte Stabilität der Kapazitätswerte bleibt solange erhalten, wie die von den Elektroden 3 und Gegenelektroden 5 gemeinsam überdeckte Fläche unverändert bleibt.

Durch das Ausbilden von Fenstern 7 wird allerdings der Ladungstransport gehemmt und es besteht außerdem die Gefahr, daß eine Elektrode oder Gegenelektrode von dem äußeren Anschlußkontakt 11 losgelöst ist, weil einer oder beide Stege 17 (vergleiche Figur 2) aus verbliebenem Elektrodenmaterial oberhalb und unterhalb des Fensters 7 unterbrochen sind. Daher muß der Fachmann die Abmessungen des Fensters 7 im Hinblick auf das sie umgebende verbleibende Elektrodenmaterial so wählen, daß die beiden genannten Nachteile in einem sinnvollen Verhältnis zu dem durch ein Fenster in der Elektrode/Gegenelektrode erzielbaren Vorteil der Stabilisierung des Kapazitätswertes stehen.

Bei Verwendung von im Vergleich zu den Gegenelektroden breiteren Elektroden zur Kompensation von Seitenverschiebung der Elektroden in Richtung auf die nicht mit äußeren Anschlußkontakten versehenen Außenflächen des Sandwichstapels, also Verschiebung in y-Richtung (vergleiche Figur B) ist es sinnvoll, die breiteren Elektroden mit einem Fenster zu versehen, weil dort mehr restliche Fläche nach Ausbildung des Fensters verbleibt als beim Anbringen der Fenster in den jeweils schmaleren Gegenelektroden.

Zweckmäßig sind folgende Ausführungsformen der erfindungsgemäßen Elektroden/Gegenelektroden:

Wie in Figur 1a gezeigt, können die Elektroden 3 und/oder die Gegenelektroden 5 im Bereich der Fenster 7 eine verbreiterte Fläche 13 aufweisen. Hierdurch wird mit Sicherheit erreicht, daß eine ausreichende Kontaktierung mit den äußeren Anschlußkontakten 11 zustandekommt, weil die dadurch oberhalb und unterhalb der Fenster 7 ausgebildeten Stege aus Elektrodenmaterial relativ breit sein können.

Wie in Figur 2a gezeigt, können sowohl die Elektroden 3 als auch die Gegenelektroden 5 mit Fenstern 7 versehen werden. Hierdurch ergeben sich zwei Vorteile: Um eine vorgegebene Verschiebung $\Delta x$ in x-Richtung bezüglich der Kapazitätswerte zu kompensieren, genügen geringere Fensterbreiten in x-Richtung gegenüber der Ausführungsform mit nur Fenstern in jeweils jeder Elektrode 3 oder Gegenelektrode 5. Dadurch verringert sich die Gefahr, daß die Elektroden 3 oder Gegenelektroden 5 infolge unterbrochener Stege 17 keinen ausreichenden Kontakt mit dem sie jeweils kontaktierenden äußeren Anschlußkontakt 11 haben. Andererseits kann bei jeweils breiteren Fensterabmessungen in x-Richtung, die der Breite von Fenstern entsprechen, die jeweils nur in den Elektroden 3 oder nur in den Gegenelektroden 5 angebracht sind, eine größere Verschiebung $\Delta x$ kompensiert werden.

Wie in Figur 2b gezeigt, können die Fenster 5 auch geteilt sein, so daß sich ein in Längsrichtung der Elektroden 3 oder auch der Gegenelektroden 5 erstreckender Mittelsteg 9 aus Elektrodenmaterial ergibt. Auch hierdurch wird die Gefahr einer unzureichenden Kontaktierung mit den äußeren Anschlußkontakten 11 wirkungsvoll vermindert.

Die erfindungsgemäß ausgebildeten Elektroden oder Gegenelektroden für Vielschichtkondensatoren verbrauchen einen Teil des elektrischen Feldraumes zwischen den Elektroden/Gegenelektroden durch die Fenster, die jedoch den Vorteil einer Stabilisierung des Kapazitätswertes bringen. Dadurch nimmt die Volumenkapazität erfindungsgemäß ausgebildeter Vielschichtkondensatoren geringfügig ab gegenüber bekannten Vielschichtkondensatoren gleicher Abmessungen jedoch fensterloser Elektroden und Gegenelektroden. Um mit erfindungsgemäß ausgebildeten Vielschichtkondensatoren gleiche Volumenkapazitätswerte wie mit bekannten Vielschichtkondensatoren gleicher Bauform zu erreichen, kann der Sandwichstapel bei Bedarf um eine Elektroden-/Dielektrikum-Lage aufgestockt werden.

Die Wirksamkeit der erfindungsgemäß vorgeschlagenen Maßnahmen soll anhand eines Zahlenbeispiels verdeutlicht werden.

Die nachfolgende Kapazitätsberechnung stützt sich auf die bekannte Formel für den Plattenkondensator

$$C \;=\; \varepsilon \times \frac{A}{d}$$

$\varepsilon = \varepsilon_O\,\varepsilon_r$      Dielektrizitätskonstante,
$A =$      von beiden Platten gemeinsam überdeckte Fläche,
$d =$      Plattenabstand.

Bei dieser Berechnung wird nur der Feldraum zwischen den Platten und innerhalb der gemeinsam überdeckten Fläche berücksichtigt. Die Einbeziehung von Randeffekten würde alle Rechenergebnisse gleichermaßen (geringfügig) beeinflussen, die qualitative Aussage wird dadurch nicht verändert.

Im folgenden werden Vielschichtkondensatoren mit einem Sandwichstapel von fünf Elektroden I bis V und dazwischen angeordneten dielektrischen Schichten einer relativen Dielektrizitätskonstanten von $\varepsilon_r = 133$ und einem Abstand von $d = 20\ \mu m$ zwischen benachbarten Elektroden/Gegenelektroden betrachtet. Diese und alle übrigen Werte orientieren sich an den realen Größenordnungen typischer Vielschichtkondensatoren. Alle Ergebnisse sind auf eine Stelle hinter dem Komma abgerundet.

1. Vielschichtkondensator mit gleich geformten Elektroden ohne Fenster:

Die Elektroden I, III und V seien mit dem ersten äußeren Anschlußkontakt und die Elektroden II und IV mit dem zweiten äußeren Anschlußkontakt kontaktiert.

Mit einer Überlappfläche zwischen benachbarten Elektroden/Gegenelektroden von A = 2 mm x 1 mm folgt

$$C = 4 \times \varepsilon \times \frac{A}{d}$$

$$= 4 \times 8,85 \times 10^{-12} \frac{F}{m} \times 133 \times \frac{2mm^2}{20\mu m}$$

$$= 470,8 \ pF.$$

Wird nun eine der Elektroden 2,3 oder 4 in x-Richtung und in y-Richtung verschoben, so daß sich eine mittlere Überlappfläche von

A = 1,75 x 0,09 zwischen benachbarten Elektroden/Gegenelektroden ergibt, folgt

$$\bar{C} = 2 \times \varepsilon \times \frac{A+\bar{A}}{d}$$

$$= 2 \times 8,85 \times 10^{-12} \frac{F}{m} \times 133 \times \frac{2mm^2 + 1,575mm^2}{20\mu m}$$

$$= 420,8 \ pF.$$

Die Kapazitätsänderung beträgt demnach 10,6 %. Wird eine der Elektroden I oder V verschoben, ergibt sich in entsprechender Weise eine Kapazitätsänderung von 5,3 %.

2. Vielschichtkondensator mit ungleich geformten, d.h., mit mit Fenstern versehenen und jeweils verbreiterten Elektroden:

Die Elektroden I,III und V seien wieder mit dem ersten äußeren Anschlußkontakt kontaktiert und seien im Bereich ihrer den äußeren Anschlußkontakten benachbarten Endbereiche mit Fenstern versehen, in welche die ihnen benachbarten Gegenelektroden II und IV mit ihren nicht mit dem zweiten äußeren Anschlußkontakt kontaktierten Endflächen bis etwa zur Fenstermitte hineinragen. Die Elektroden I,III und V werden außerdem als verbreitert gegenüber den Gegenelektroden II und IV angenommen.

Mit A = 2 mm x 1 mm als Überlappfläche zwischen benachbarten Elektroden/Gegenelektroden ergibt sich die gleiche Kapazität wie gemäß Beispiel 1 zu

$$C = 4 \times \varepsilon \times \frac{A}{d}$$

$$= 470,8 \ pF.$$

Wird nun eine der Elektroden I, III oder V oder eine der Gegenelektroden II oder IV in x- und/oder in y-Richtung verschoben um eine innerhalb des Fensterbereiches liegende Länge $\Delta x$ oder um eine im Bereich der gegenüber der Breite der Gegenelektroden II und IV größeren Breite der Elektroden I,III und V liegende Länge $\Delta y$, ändert sich die Überlappfläche zwischen benachbarten Elektroden nicht und der Kapazitätswert bleibt konstant.

**Patentansprüche**

1. Schichtkondensator mit einer dielektrischen Schicht (1) zwischen mindestens einer Elektrode (3) und Gegenelektrode (5), welche derart parallel zueinander versetzt angeordnet sind, daß eine Kante der Elektrode (3) nur an der einen und die gegenüberliegende Kante der Gegenelektrode (5) nur an der anderen Stirnseite des Kondensators bündig enden und dort mit Anschlußkontakten (11) versehen sind und mindestens die Elektrode (3) im Bereich der Stirnseite ein Fenster (7) aufweist und sich das nichtkontaktierte Ende (15) der Gegenelektrode (5) in den Bereich des Fensters (7) erstreckt,
dadurch gekennzeichnet, daß sich das Fenster (7) parallel zur stirnseitigen kürzeren Kante der Elektrode (3) erstreckt und im Bereich des Fensters (7) auf der Elektrode (3) eine Verbreiterung der mit Elektrodenmaterial versehenen Fläche vorgesehen ist.

2. Kondensator nach Anspruch 1,
dadurch gekennzeichnet,
daß mindestens eine Gegenelektrode (5) in ihrem der ihr zugeordneten äußeren Anschlußelektrode (11) benachbarten Endbereich ein Fenster (7) aufweist.

3. Kondensator nach Anspruch 2,
dadurch gekennzeichnet,
daß die Gegenelektrode(n) (5) im Bereich ihrer (ihres) Fenster(s) (7) eine verbreiterte Fläche (13) aufweisen.

4. Kondensator nach mindestens einem der Ansprüche 1 bis 3,
dadurch gekennzeichnet,
daß das (die) Fenster (7) jeweils geteilt ist (sind), derart, daß mindestens ein sich in Längsrichtung der Elektrode(n) (3) und/oder der Gegenelektrode(n) (5) erstreckender Mittelsteg (9) aus Elektrodenmaterial ausgebildet ist.

5. Kondensator nach mindestens einem der Ansprüche 1 bis 4 gekennzeichnet durch mindestens eine dielektrische Schicht (1) aus Keramik.

6. Kondensator nach mindestens einem der Ansprüche 1 bis 5,
gekennzeichnet durch jeweils mindestens eine Elektrode (3) und Gegenelektrode (5) in Form von Metallschichten.

7. Kondensator nach Anspruch 6
gekennzeichnet durch jeweils mindestens eine Elektrode (3) und Gegenelektrode (5) aus Nickel- oder Chrom/Nickel-Schichten.

8. Verfahren zum Herstellen von Schichtkondensatoren nach einem oder mehreren der Ansprüche 1 bis 7, wobei mindestens eine dielektrische Schicht (1) mit einer jeweils flächigen Elektrode (3) und Gegenelektrode (5) versehen wird und die Elektrode (3) und Gegenelektrode (5) versetzt gegeneinander angeordnet werden, derart, daß sie an jeweils einer von zwei einander gegenüberliegenden Stirnflächen des Kondensators bündig enden und mit äuBeren Anschlußkontakten kontaktiert werden und die Elektrode (3) im Bereich der Stirnfläche ein Fenster (7) erhält und das nichtkontaktierte Ende (15) der Gegenelektrode (5) sich in diesen Bereich des Fensters (7) erstreckend angeordnet wird,
dadurch gekennzeichnet, daß das Fenster (7) parallel der stirnseitigen kürzeren Kante der Elektrode (3) angeordnet wird und im Bereich des Fensters (7) auf der Elektrode (3) eine Verbreiterung der mit Elektrodenmaterial versehenen Fläche vorgesehen ist.

9. Verfahren nach Anspruch 8,
dadurch gekennzeichnet,
daß in mindestens einer Gegenelektrode (5) in ihrem, dem ihr zugeordneten äußeren Anschlußkontakt (11) benachbarten Endbereich ein Fenster (7) angebracht wird.

10. Verfahren nach Anspruch 8 oder 9,
dadurch gekennzeichnet,
daß der Kondensator aus mindenstens einer Folie aus ungebrannter grüner Keramik als dielektrischer Schicht (1) mit darauf angebrachten metallischen Schichten für die Elektrode(n) (3) und die Gegenelektrode(n) (5) aufgebaut, anschließend gesintert und mit den äußeren Anschlußkontakten (11) versehen wird.

11. Verfahren nach Anspruch 10,
dadurch gekennzeichnet,
daß die Schichten für die Elektrode(n) (3) und die Gegenelektrode(n) (5) in Form einer Suspension von Metallpulver in einem organischen Bindemittel auf die dielektrische(n) Schicht(en) (1) aufgebracht werden unter Anwendung mindestens einer Maske, die jeweils die nicht mit der Suspension zu bedeckenden Bereiche der dielektrischen Schicht(en) und insbesondere die den auszubildenden Fenstern (7) entsprechenden Bereiche abdeckt.

12. Verfahren nach Anspruch 11,
dadurch gekennzeichnet,
daß zur Ausbildung der Schichten für die Elektrode(n) (3) und Gegenelektrode(n) (5) eine Nichtedelmetallpulver enthaltende Suspension eingesetzt wird.

## Claims

1. A single or multilayer capacitor having a dielectric layer (1) present between at least one electrode (3) and opposite electrode (5), the electrode(s) and the opposite electrode(s) being arranged so as to be parallel and staggered, with an end face of the electrode (3) terminating only at one end face of the capacitor and the opposite end face of the opposite electrode (5) terminating only at the other end face of the capacitor, connection contacts (11) being provided where the electrodes terminate, and at least the electrode (3) comprises a window (7) at the area of the end face of the capacitor and the non-contacted end (15) of the opposite electrode (5) extends in the area of the window (7), characterized in that the window (7) extends parallel to the shorter end face of the electrode (3) terminating at the end face of the capacitor and in that at the area of the window (7) the electrode (3) is provided with a widened portion carrying electrode material.

2. A capacitor as claimed in Claim 1, characterized in that at least one opposite electrode (5) comprises a window (7) at its end area adjacent the associated external connection electrode (11).

3. A capacitor as claimed in Claim 2, characterized in that the opposite electrode(s) (5) comprise(s) a widened area (13) at the area of its (their) window(s) (7).

4. A capacitor as claimed in at least one of the Claims 1 to 3, characterized in that the window(s) (7) is (are) divided in such a manner that at least one central bridge (9) of electrode material is formed in the longitudinal direction of the electrode(s) (3) and/or opposite electrode(s) (5).

5. A capacitor as claimed in at least one of the Claims 1 to 4, characterized by at least one dielectric layer (1) of ceramics.

6. A capacitor as claimed in at least one of the Claims 1 to 5, characterized by at least one electrode (3) and opposite electrode (5) in the form of metal layers.

7. A capacitor as claimed in Claim 6, characterized by at least one electrode (3) and opposite electrode (5) of layers of nickel or chromium/nickel.

8. A method of manufacturing single or multilayer capacitors as claimed in any one of Claims 1 to 7, in which at least one dielectric layer (1) is provided with each time a flat electrode (3) and opposite electrode (5) and the electrode (3) and the opposite electrode (5) are staggered with respect to each other in such a manner that they each terminate at one of two opposing end faces of the capacitor and are brought into contact with external connection contacts, and the electrode (3) has a window (7) at its end area, and that the non-contacted end (15) of the opposite electrode (5) extends in this area of the window, characterized in that the window is arranged parallel to the shorter end face of the electrode (3) terminating at the end face of the capacitor and in that at the area of the window (7) the electrode (3) is provided with a widened portion carrying electrode material.

9. A method as claimed in Claim 8, characterized in that a window (7) is provided in at least one opposite electrode (5) at its end area adjacent the associated external connection contact (11).

10. A method as claimed in Claim 8 or 9, characterized in that the capacitor is constructed from at least one foil of unburnt green ceramic material as a dielectric layer (1) on which metallic layers for the electrode(s) (3) and the opposite electrode(s) (5) are provided, whereafter the capacitor is sintered and provided with the external connection contacts (11).

11. A method as claimed in Claim 10, characterized in that the layers for the electrode(s) (3) and the opposite electrode(s) (5) are provided on the dielectric layer(s) (1) in the form of a suspension of metal powder in an organic binder while using at least one mask which covers the areas of the dielectric layer(s) which are not to be coated with the suspension and in particular the areas corresponding to the windows (7) to be formed.

12. A method as claimed in Claim 11, characterized in that for the formation of the layers for the electrode(s) (3) and opposite electrode(s) (5) a suspension comprising a base metal powder is used.

**Revendications**

1. Condensateur laminaire comportant une couche diélectrique (1) formée au moins entre une électrode (3) et une électrode opposée (5) qui sont désaxées parallèlement l'une par rapport à l'autre de façon que l'un des bords de l'électrode (3) se termine uniquement à fleur de l'une des faces terminales du condensateur et que le bord situé à l'opposé de l'électrode opposée (5) se termine uniquement à fleur de l'autre face terminale du condensateur, qu'elles soient munies là de connexions (11) et qu'au moins l'électrode (3) présente une fenêtre (7) percée dans la zone de la face terminale et que l'extrémité exempte de contacts (15) de l'électrode opposée (5) s'étende dans la zone de la fenêtre (7), caractérisée en ce que la fenêtre (7) s'étend parallèlement au plus petit bord latéral de l'électrode (3) et que dans la zone de la fenêtre (7) on a prévu sur l'électrode (3) un élargissement de la surface revêtue en matériau d'électrode.

2. Condensateur selon la revendication 1, caractérisé en ce qu'au moins une électrode opposée (5) présente une fenêtre (7) pratiquée dans la zone terminale de l'électrode, ladite zone étant ciontiguë à la connexion extérieure (11) associée à ladite électrode opposée.

3. Condensateur selon la revendication 2, caractérisé en ce que l'électrode (les électrodes) opposée(s) (5) présente(nt) une surface élargie (13) s'étendant dans la zone de leur(s) fenêtre(s) (7).

4. Condensateur selon au moins l'une des revendications 1 à 3, caractérisé en ce que la (les) fenêtre(s) (7) est (sont) chaque fois divisée(s) de façon qu'au moins une partie centrale (9) s'étendant dans le sens longitudinal de l'électrode (des électrodes) (3) et/ou de l'électrode opposée (des électrodes opposées) (9) soit formée en matériau d'électrode.

5. Condensateur selon au moins l'une des revendications 1 à 4, caractérisé par moins une couche diélectrique (1) en céramique.

6. Condensateur selon au moins l'une des revendications 1 à 5, caractérisé chaque fois par au moins une électrode (3) et une électrode opposée (5) en forme de couches métalliques.

7. Condensateur selon la revendication 6, caractérisé chaque fois par au moins une électrode (3) et une électrode opposée (5) en couches de nickel ou de chrome-nickel.

8. Procédé visant la fabrication de condensateurs laminaires selon l'une ou plusieurs des revendications 1 à 7, suivant lequel au moins une couche diélectrique (1) est chaque fois munie d'une électrode (3) et d'une électrode opposée laminaires (5) et suivant lequel l'électrode (3) et l'électrode opposée (5) sont disposées désaxées l'une par rapport à l'autre de façon qu'elles se terminent chaque fois à fleur de l'une de deux faces terminales mutuellement opposées du condensateur, qu'elles soient munies de connexions extérieures, qu'une fenêtre (7) soit pratiquée dans la zone terminale de l'électrode (3) et que l'extrémité exempte de contact (15) de l'électrode opposée (5) soit disposée de manière à s'étendre dans ladite zone de fenêtre (7), caractérisé en ce que la fenêtre (7) est pratiquée parallèlement au plus petit bord latéral de l'électrode (3) et que dans la zone de la fenêtre (7) sur l'électrode (3) on a prévu un élargissement de la surface revêtue de matériau d'électrode.

9. Procédé selon la revendication 8, caractérisé en ce qu'une fenêtre (7) est pratiquée au moins dans une électrode opposée (5), savoir dans la zone terminale de l'électrode, ladite zone étant contigue à la connexion extérieure (11) associée à ladite électrode opposée.

10. Procédé selon la revendication 8 ou 9, caractérisé en ce que le condensateur est fabriqué au moins à partir d'une feuille en céramique verte non brûlée utilisée comme couche diélectrique (1) sur laquelle on a prévu des couches métalliques pour l'(es) électrode(s) (3) et l'(es) électrode(s) opposée(s) (5), pour être subséquemment fritté et être muni de connexions extérieures (11).

11. Procédé selon la revendication 10, caractérisé en ce que les couches conçues pour l'(es) électrode(s) (3) et l'(es) électrode(s) opposée(s) (5) sont déposées sur la (les) couche(s) diélectrique(s) (1) en forme d'une suspension constituée de poudre métallique et d'un liant organique en utilisant au moins un masque couvrant les zones de la (les) couche(s) diélectrique(s) qui ne doivent pas être recouvertes de la suspension et particulièrement les zones des fenêtres (7) à former.

12. Procédé selon la revendication 11, caractérisé en ce que l'on utilise une suspension exempte de poudre métallique précieuse pour la formation des couches destinées pour l'(es) électrode(s) (3) et l'(es) électrode(s) opposée(s) (5).

FIG.1a

FIG.1b

FIG.2a

FIG.2b

FIG.3

FIG.4

FIG.5a

FIG.5b